# EUROPEAN PATENT SPECIFICATION

(11) **EP 3 006 325 B1**
(45) Date of publication and mention of the grant of the patent: **17.04.2019**
(21) Application number: 14003437.2
(22) Date of filing: 07.10.2014
(51) Int. Cl.: B63H 3/00, F16J 15/54

(54) **Variable pitch propeller**
Verstellbarer Spitzenpropeller
Propulseur à pas variable

(43) Date of publication of application: 13.04.2016
(73) Proprietor: Caterpillar Propulsion Production AB, 47522 Ockaro (SE)
(72) Inventor: Thyberg, Conny, 47532 Öckerö (SE); Svensson, Roger, 47542 Hönö (SE); Gibson, Johannes, 41468 Göteborg (SE)
(74) Representative: BRP Renaud & Partner mbB Rechtsanwälte Patentanwälte Steuerberater

(56) References cited:
- DE-U- 1 798 583
- FR-A- 916 295
- JP-A- S58 202 189
- US-A- 3 380 536

## Description

### Technical field

The present disclosure relates to a variable pitch propeller.

### Background

Propellers for marine vessels generally require sealing arrangements in order to prevent water ingress into the propeller and also oil leakage.

In the case of a variable pitch propeller, the propeller may typically comprise a main hub body and four blades, equally spaced around a periphery of the hub body. Each blade may have a variable position and/or orientation so as to change an effective pitch of the propeller. The pitch can thus be controlled so as to influence directional thrust of a marine vessel and also efficiency of the marine vessel. In order to effect the change in pitch, each blade may rotate with respect to the hub body. The rotation of the blades may be caused by a pitch-setting hydraulic servo cylinder provided in the hub body, which may move back and forth along a central axis of the hub body (around which the blades are disposed) to effect the rotation.

Accordingly, in addition to a typical sealing arrangement between the variable pitch propeller and any interconnected components, a further sealing arrangement may be required for the rotational arrangement between the blade and the hub body.

Examples of sealing arrangements between propeller blades and propeller hub are disclosed by US 3,380,536 A being considered as closest prior art and JP S58 202189A

### Summary

According to one aspect of the present disclosure, there is provided a variable pitch propeller for a marine vessel according to claim 1.

### Brief description of the drawings

Aspects of the present disclosure will now be described, by way of example only, with reference to the following figures, in which:
Figure 1 is a perspective view of a variable pitch propeller according to an exemplary embodiment of the present disclosure;
Figure 2 is another perspective view of the variable pitch propeller of Figure 1;
Figure 3 is another perspective view of the variable pitch propeller of Figure 1;
Figure 4 is a perspective view of the variable pitch propeller with a part cut-away section;
Figure 5 is a cross-sectional view of the variable pitch propeller; and
Figure 6 is a cross-sectional view of a portion of the variable pitch propeller.

### Detailed description

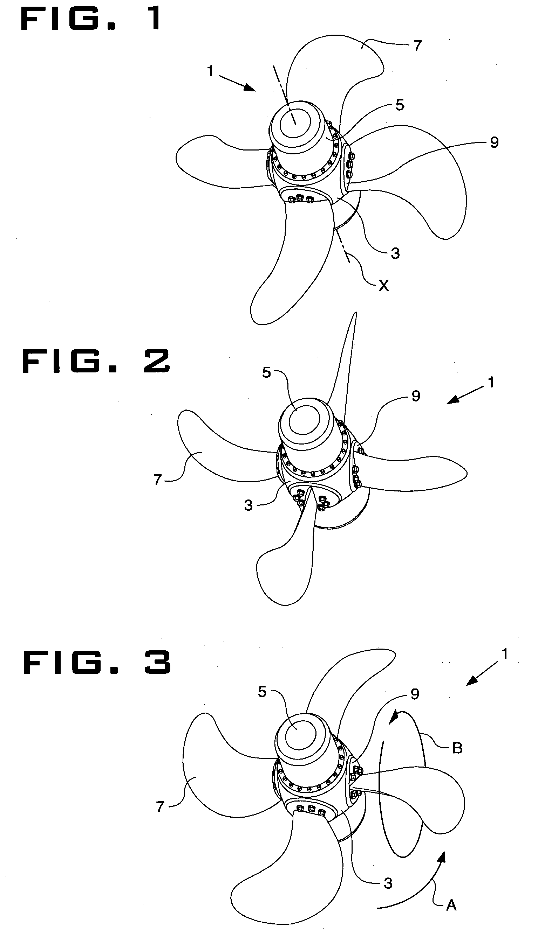

Figures 1 to 3 show representations of a variable pitch propeller 1 that may be part of a machine (not shown). Each figure shows the variable pitch propeller 1 having a different pitch. The machine may be a marine vessel or any other type of machine that may use a propulsion system. For example, the marine vessel may be a ship.

Referring to Figure 1, the propeller 1 comprises a central hub 3 and a central hub cylinder 5, which are both arranged to rotate together around a central axis X. One or more blades 7 may be provided around a periphery of the central hub 3 and may extend radially outward from the central axis X. In this example, four blades 7 are provided equally spaced around the periphery. The blades 7 may rotate around the central axis X along with the central hub 3 so as to provide a propulsion force. For example, the blades may each be shaped with a particular profile such as a substantially curved profile so as to achieve such propulsive effect. The rotation of the blades 7 around the central axis X may provide propulsion as represented by arrow A in Figure 3.

Each of the blades 7 are mounted on a blade flange 9, which blade flange 9 may be rotatably fixed to the central hub 3 in a manner such that the blade 7 may rotate around a pitch control axis (not shown) that is orthogonal to the central axis X and extends radially outward from the central axis X. The rotation of the blade 7 about the pitch control axis may allow the pitch of each blade 7 to be controlled. The pitch is defined as a distance a blade will travel through one revolution of the propeller without any "slip". For example, the distance a propeller would move in one revolution if it were moving through a soft solid, like a screw through wood.

Figures 1 to 3 each show different blade 7 pitches for achieving different propulsive effects. In Figure 1, the blades 7 are positioned in a "zero pitch" position. In Figure 2, the blades 7 are positioned in a "feathered" position such that the blades 7 may be aligned with a flow direction of the associated marine vessel, resulting in minimum resistance due to the travel of the marine vessel. In Figure 3, the blades are positioned in an "ahead" position for positive propulsion of the associated marine vessel. The blades may be positioned in an "astern" position (not shown) for negative propulsion (i.e. reverse direction) of the associated marine vessel.

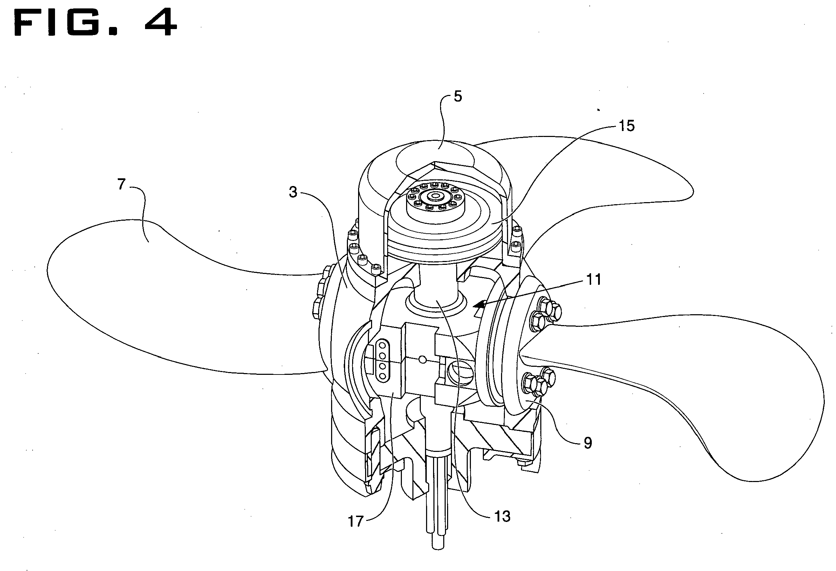

Figure 4 shows a representation of the variable pitch propeller 1 having a part cut-away section so that selected internal mechanisms are shown.

A hydraulic piston arrangement 11 may be housed within the central hub 3 and central hub cylinder 5. The hydraulic piston arrangement 11 may comprise a piston rod 13 having a piston 15 at one end and a piston rod head 17 disposed along the piston rod 13.

The piston rod head 17 may be arranged so that it is in communication with the plurality of blade flanges 9. In this manner, an axial movement of the piston rod head 17 along the central axis X may effect a rotational movement of the plurality of blade flanges 9, and thereby vary the pitch of the associated blades 7.

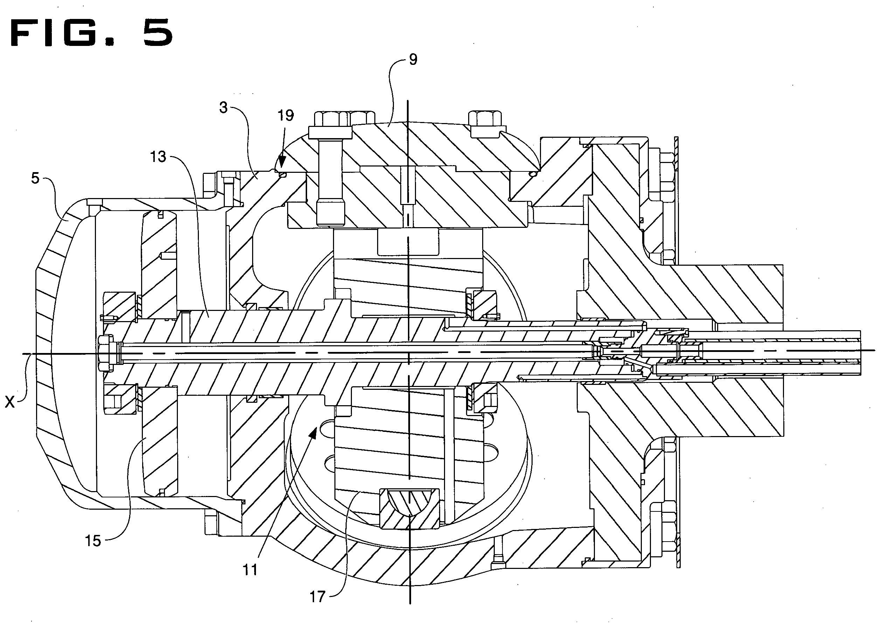

Figure 5 shows a cross-sectional view of the variable pitch propeller with selected portions omitted for simplification of explanation. For example, only a single blade flange 9 is shown without any associated blade 7 being shown.

For each interfacing section between the central hub 3 and a respective blade flange 9, a sealing arrangement 19 may be provided. In particular, as the blade flange 9 may be configured to rotate with respect to the central hub 3, a space between the blade flange 9 and central hub 3 may be inherent. The sealing arrangement 19 may act to substantially prevent matter from outside of the propeller 1 from passing to the inside of the propeller 1, via such space. The sealing arrangement 19 may also act to substantially prevent matter from within the propeller 1 from passing to the outside, via the space. For example, the sealing arrangement 19 may substantially prevent water ingress and substantially prevent oil leakage.

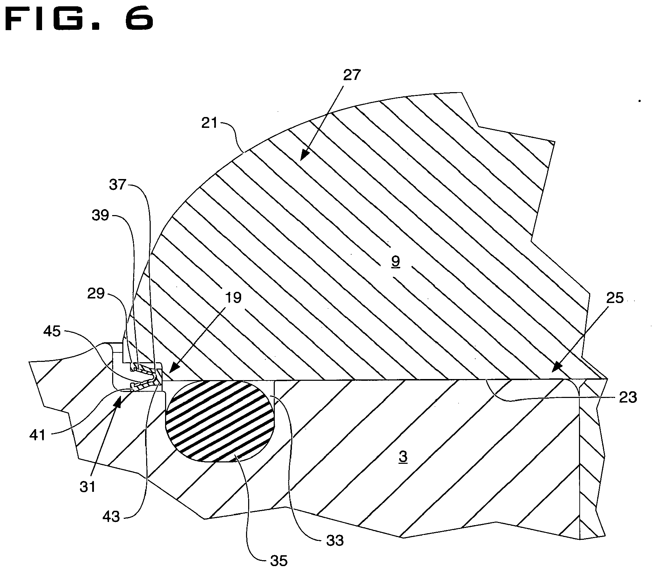

The sealing arrangement is shown in more detail in Figure 6.

Figure 6 shows a cross-sectional view of an interfacing section between the central hub 3 and a blade flange 9, showing the sealing arrangement 19 in more detail.

The blade flange 9 may generally take a hemispherical shape and therefore may have a substantially semicircle cross-section with a curved outer surface 21 and a generally planar inner surface 23. The blade flange 9 may be positioned so that the curved outer surface 21 faces away from the central hub 3 and the planar inner surface 23 faces the central hub 3. The planar inner surface 23 may be in communication with the piston rod head 17 (see Figure 5) of the hydraulic piston arrangement 11.

The planar inner surface 23 may have a stepped profile towards the periphery of the blade flange 9 so as to define a lower section 25 and an upper section 27 of the blade flange 9. The lower section 25 may have a radius smaller than a radius of the upper section 27. In this manner, the joining of the upper section 27 to the lower section 25 may define a lip portion 29 around the periphery of the blade flange 9.

The central hub 3 may comprise a recessed section 31 in which a portion of the blade flange 9 is received. Within the recessed section 31, there may be provided a circumferential groove 33 for location of a first seal 35. The first seal is secured to the central hub 3 within the circumferential groove 33. For example, the first seal may be an O-ring type seal. The first seal 35 may be arranged to substantially prevent matter from passing between the central hub 3 and the blade flange 9. For example, the first seal 35 may be configured to prevent water ingress into the propeller 1. The inner surface 23 of the blade flange 9 may communicate with the first seal 35 so as to provide the sealing function of the first seal 35.

A second seal 37 may be located about a periphery of the blade flange 9. For example, the second seal 37 may be disposed about the lower section 25 of the blade flange 9. The second seal 37 may be secured to the lower section 25 and adjacent to the upper section 27. For example, the second seal 37 may be a lip-type seal that is secured to a periphery of the lower section 25 of the blade flange 9. The lip-type seal may comprise an upper portion 39 and a lower portion 41 joined together via a central portion 43. The upper portion 39 and lower portion 41 may extend radially outward from the central portion 41 and may have a separation distance that increases as a function of radial distance. The upper portion 39 may tend towards or abut the lip portion 29. The lower portion 41 may tend towards or abut the central hub 3. The upper portion 39 and lower portion may be biased apart using a resilient but flexible spring element 45. Alternatively, the biasing may be inherent in the material and construction of the second seal 37.

The second seal 37 may be flexible and resilient so as to stretch around the blade flange 9 and retain its position. Additionally or alternatively, the second seal 37 may be secured to the blade flange 9 using an adhesive of mechanical locking mechanism. A peripheral recess in the blade flange 9 may also be used to assist location and retention of the second seal 37.

### Industrial applicability

The variable pitch propeller 1 described above may be implemented in a machine, for example a marine vessel such as a ship. The variable pitch propeller 1 may be driven by a motor and the pitch may be controlled by a pitch-setting hydraulic servo cylinder.

The sealing arrangement 19 may act to prevent matter from passing between the outside of the propeller 1 and the inside of the propeller 1. In particular, for example, the first seal 35 may be constructed and arranged to substantially prevent water ingress into and oil leakage from the variable pitch propeller 1.

As dirt ingress could potentially deteriorate the first seal 35, the second seal 37 may be constructed and arranged to substantially prevent dirt from contacting the first seal 35. More particularly, a first seal 35 of the O-ring type may inherently define cavity areas, for example, where the curvature of the first seal 35 meets the blade flange 9. These cavity areas may be prone to such dirt ingress. If particles such as sand particles become lodged in such cavity areas, the rotation of the blade flange 9 with respect to the fixed first.seal 35 may cause friction between the first seal 35 and the sand particles thereby deteriorating the first seal 35. The second seal 37 may act to substantially reduce or prevent such particles from reaching the first seal 35.

Where the second seal 37 is in the form of a lip-type seal in the manner described herein, this may assist the prevention of deterioration of the second seal 37 itself due to, for example, ingress of sand particles. In particular, the spaced upper portion 39 and lower portion 41 may reduce the likelihood of cavities, which in turn may reduce the likelihood of sand particles being lodged between the second seal 37 and any moving part.

The sealing arrangement 19 may therefore provide robust and effective protection for the variable pitch propeller. Although exemplary embodiments of the present disclosure have been described herein, it will be appreciated that various improvements and modifications may be incorporated without departing from the scope of the following claims.

## Claims

1. A variable pitch propeller (1) for a marine vessel, wherein the variable pitch propeller (1) comprises:
a propeller hub (3);
a propeller blade flange (9) for a propeller blade (7), the propeller blade flange (9) being rotatably fixed to the propeller hub (3); and
a sealing arrangement (19) disposed between the propeller hub (3) and the propeller blade flange (9), the sealing arrangement (19) comprising:
a first seal (35) secured to the propeller hub (3) ; and
a second seal (37) secured to the propeller blade flange (9), the second seal (37) being arranged to rotate with the propeller blade flange (9),
wherein the first seal (35) and the second seal (37) are provided separate from one another, and
the first seal (35) and the second seal (37) being arranged to substantially prevent matter from passing between the propeller hub (3) and the propeller blade flange (9, characterise in that the second seal (37) is a circumferential lip-type seal.

2. A variable pitch propeller (1) according to claim 1, wherein the first seal (35) is one of an O-ring type seal and an X-ring type seal.

3. A variable pitch propeller (1) according to any preceding claim, wherein the propeller blade flange (9) comprises an lower section (25) for rotation within the propeller hub (3), and an upper section (27) connected to the lower section (25) for rotation outside of the propeller hub (3).

4. A variable pitch propeller (1) according to claim 3, wherein the second seal (37) is secured to an outer periphery of one of the lower section (25) and the upper section (27).

5. A variable pitch propeller (1) according to claim 3, wherein the upper section (27) comprises a flange around an outer periphery of the upper section (27), and wherein the second seal (37) is secured to the flange.

6. A variable pitch propeller (1) according to any preceding claim, wherein the second seal (37) comprises silicon.

7. A variable pitch propeller (1) according to any preceding claim, wherein the first seal (35) is constructed and arranged to substantially prevent water ingress into and oil leakage from the variable pitch propeller (1).

8. A variable pitch propeller (1) according to any preceding claim, wherein the second seal (37) is constructed and arranged to substantially prevent dirt from contacting the first seal (35).

## Patentansprüche

1. Propeller (1) mit variabler Neigung für ein Seefahrzeug, wobei der Propeller (1) mit variabler Neigung umfasst:
eine Propellernabe (3);
einen Propellerblattflansch (9) für ein Propellerblatt (7), wobei der Propellerblattflansch (9) rotierbar an der Propellernabe (3) fixiert ist; und
eine Dichtungsanordnung (19), angeordnet zwischen der Propellernabe (3) und dem Propellerblattflansch (9), wobei die Dichtungsanordnung (19) umfasst:
eine erste Dichtung (35), gesichert an der Propellernabe (3); und
eine zweite Dichtung (37), gesichert an dem Propellerblattflansch (9), wobei die zweite Dichtung (37) angeordnet ist, um mit dem Propellerblattflansch (9) zu rotieren,
wobei die erste Dichtung (35) und die zweite Dichtung (37) separat voneinander bereitgestellt sind, und
wobei die erste Dichtung (35) und die zweite Dichtung (37) angeordnet sind, um im Wesentlichen Materie daran zu hindern, zwischen der Propellernabe (3) und dem Propellerblattflansch (9) zu passieren, **dadurch gekennzeichnet, dass** die zweite Dichtung (37) eine umfängliche Lippen-artige Dichtung ist.

2. Propeller (1) mit variabler Neigung nach Anspruch 1, wobei die erste Dichtung (35) eines aus einer O-Ring-artigen Dichtung und einer X-Ring-artigen Dichtung ist.

3. Propeller (1) mit variabler Neigung nach einem vorstehenden Anspruch, wobei der Propellerblattflansch (9) eine untere Sektion (25) zur Rotation innerhalb der Propellernabe (3) umfasst und eine obere Sektion (27), verbunden mit der unteren Sektion (25) zur Rotation außerhalb der Propellernabe (3).

4. Propeller (1) mit variabler Neigung nach Anspruch 3, wobei die zweite Dichtung (37) an einer äußeren Peripherie von einer der unteren Sektion (25) und der oberen Sektion (27) gesichert ist.

5. Propeller (1) mit variabler Neigung nach Anspruch 3, wobei die obere Sektion (27) einen Flansch um eine äußere Peripherie der oberen Sektion (27) umfasst, und wobei die zweite Dichtung (37) an dem Flansch gesichert ist.

6. Propeller (1) mit variabler Neigung nach einem vorstehenden Anspruch, wobei die zweite Dichtung (37) Silikon umfasst.

7. Propeller (1) mit variabler Neigung nach einem vorstehenden Anspruch, wobei die erste Dichtung (35) konstruiert und angeordnet ist, um im Wesentlichen Wassereintritt in und Ölleckage aus dem Propeller (1) mit variabler Neigung zu verhindern.

8. Propeller (1) mit variabler Neigung nah einem vorstehenden Anspruch, wobei die zweite Dichtung (37) konstruiert und angeordnet ist, um im Wesentlichen Dreck daran zu hindern, die erste Dichtung (35) zu kontaktieren.

## Revendications

1. Propulseur à pas variable (1) pour un navire, dans lequel le propulseur à pas variable (1) comprend :
un moyeu de propulseur (3) ;
une bride de pale de propulseur (9) pour une pale de propulseur (7), la bride de pale de propulseur (9) étant fixée au moyeu de propulseur (3) de manière à pouvoir tourner ; et
un agencement d'étanchéité (19) disposé entre le moyeu de propulseur (3) et la bride de pale de propulseur (9), l'agencement d'étanchéité (19) comprenant :
un premier joint (35) fixé au moyeu de propulseur (3) ; et
un second joint (37) fixé à la bride de pale de propulseur (9), le second joint (37) étant agencé pour tourner avec la bride de pale de propulseur (9),
dans lequel le premier joint (35) et le second joint (37) sont prévus séparément l'un de l'autre, et
le premier joint (35) et le second joint (37) étant agencés pour empêcher sensiblement des substances de passer entre le moyeu de propulseur (3) et la bride de pale de propulseur (9), **caractérisé en ce que** le second joint (37) est un joint à couvercle circonférentiel.

2. Propulseur à pas variable (1) selon la revendication 1, dans lequel le premier joint (35) est un parmi un joint de type joint torique et un joint de type bague X.

3. Propulseur à pas variable (1) selon l'une quelconque des revendications précédentes, dans lequel la bride de pale de propulseur (9) comprend une section inférieure (25) pour la rotation dans le moyeu de propulseur (3), et une section supérieure (27) raccordée à la section inférieure (25) pour la rotation en dehors du moyeu de propulseur (3).

4. Propulseur à pas variable (1) selon la revendication 3, dans lequel le second joint (37) est fixé à une périphérie extérieure d'une parmi la section inférieure (25) et la section supérieure (27).

5. Propulseur à pas variable (1) selon la revendication 3, dans lequel la section supérieure (27) comprend une bride autour d'une périphérie extérieure de la section supérieure (27), et dans lequel le second joint (37) est fixé à la bride.

6. Propulseur à pas variable (1) selon l'une quelconque des revendications précédentes, dans lequel le second joint (37) comprend du silicium.

7. Propulseur à pas variable (1) selon l'une quelconque des revendications précédentes, dans lequel le premier joint (35) est construit et agencé pour empêcher sensiblement une infiltration d'eau et une fuite d'huile du propulseur à pas variable (1).

8. Propulseur à pas variable (1) selon l'une quelconque des revendications précédentes, dans lequel le second joint (37) est construit et agencé pour empêcher sensiblement la saleté de toucher le premier joint (35).
